# DEMANDE DE BREVET EUROPEEN

(11) **EP 0 747 532 A1**
(43) Date de publication de la demande: **11.12.1996**
(21) Numéro de dépôt: 96401231.4
(22) Date de dépôt: 07.06.1996
(51) Int. Cl.: E01C 23/16

(54) **Engin de marquage de chaussées ou autres**

(30) Priorité: 09.06.1995 FR 9507038; 28.02.1996 FR 9602707
(71) Demandeur: Société GSR, 49070 Angers (FR)
(72) Inventeur: Mayadoux, Georges, 49000 Angers (FR); Camus, Bernard, 01600 Reyrieux (FR)
(74) Mandataire: Phélip, Bruno

(57) **Abrégé**

L'engin de marquage est constitué d'un véhicule porteur dont la cabine comporte deux places pour accueillir un conducteur et un opérateur, laquelle cabine est équipée d'un poste de conduite double.

Le marquage s'effectue au moyen d'un chariot (6) qui est porté par un bras télescopique (7), lequel bras coopère avec des moyens qui permettent de positionner ledit chariot (6) soit à droite soit à gauche du véhicule pour effectuer selon les besoins un marquage en rive ou en axe. Le conducteur se positionne du côté inverse de celui du chariot (6) alors que l'opérateur se place dans la cabine, du côté dudit chariot pour commander l'opération de marquage et surveiller son bon déroulement.

## Description

La présente invention concerne un engin de marquage de chaussées ou autres et, plus particulièrement, un véhicule genre camion, dont la carrosserie est aménagée pour transporter tout l'appareillage nécessaire pour mener à bien ces opérations de marquage.

Le marquage, sur routes ou autoroutes, peut être effectué en rive, c'est-à-dire sur la bordure de la chaussée au niveau du bas-côté, ou en axe c'est-à-dire dans la partie centrale de la chaussée.

La présente invention propose un engin qui permet de réaliser le marquage en rive ou en axe, au moyen d'un seul chariot de marquage positionné à droite ou à gauche du véhicule selon le cas, en fonction des besoins.

Cette particularité permet de disposer d'un véhicule polyvalent qui présente surtout comme avantage de permettre un déplacement de l'engin sur la chaussée en évoluant dans le sens normal de circulation sans constituer une gêne incontournable pour les éventuels autres usagers.

Cette particularité est également intéressante pour réaliser des opérations de réfection du marquage.

Selon l'invention, l'engin comprend un chariot de marquage et il est constitué d'un véhicule porteur du type camion muni d'une cabine comportant au moins deux places, pour accueillir notamment le conducteur du véhicule et un opérateur chargé du marquage, laquelle cabine est équipée d'un poste de conduite double, disposé à droite et à gauche du véhicule, et ledit chariot de marquage est porté par un bras solidaire du châssis dudit véhicule, lequel bras coopère avec des moyens susceptibles de le positionner soit à droite soit à gauche dudit camion pour effectuer, selon les besoins, un marquage en rive ou en axe, avec la possibilité de placer toujours l'opérateur du même côté que le chariot, c'est-à-dire à droite ou à gauche, pour commander et suivre l'opération de marquage.

Toujours selon l'invention, le chariot de marquage comporte au moins une caméra qui permet au conducteur de suivre un tracé préalable quelconque, l'axe de visée de la caméra correspondant à l'axe d'avancement de l'engin.

La précision et la qualité géométrique du marquage dépendent de la capacité du conducteur à suivre le tracé préalable. Cette contrainte est liée à la géométrie du véhicule qui, souvent, comporte des imperfections en ce sens que l'axe d'avancement ne correspond pas toujours à son axe longitudinal médian vertical. Pour faire correspondre l'axe de visée de la caméra avec l'axe d'avancement du véhicule, le châssis de ce dernier comporte, à droite et à gauche, un berceau pour positionner le bras qui porte le chariot de marquage, selon une direction qui permet de placer ladite caméra et ledit chariot sur un axe qui correspond à l'axe d'avancement dudit véhicule, lequel berceau est réglable longitudinalement par rapport audit châssis, de façon micrométrique, et il est verrouillable en position après réglage.

Selon une disposition préférentielle de l'invention, le bras porte-chariot est disposé dans un plan transversal, articulé sur un support autour d'un axe longitudinal pour basculer de droite à gauche et inversement, lequel support comporte, par rapport au châssis du camion, un léger degré de liberté autour d'un axe vertical ou de lacet, pour permettre le centrage automatique du bras dans l'un ou l'autre de ses berceaux à droite ou à gauche.

Toujours selon l'invention, le bras est manoeuvré au moyen d'un système hydraulique ou mécanique du type vérin rotatif ou motoréducteur.

Toujours selon l'invention, le bras porte-chariot est du type télescopique, les deux éléments du bras sont manoeuvrés l'un par rapport à l'autre au moyen d'un vérin pour, d'une part, permettre le déplacement latéral du chariot par rapport au camion et, d'autre part, permettre une mise en position de l'ensemble bras-chariot dans le gabarit du camion lors des manoeuvres ou lors des déplacements entre chantiers, lequel bras lors des déplacements, est verrouillé en position verticale au moyen d'un blocage du coulisseau dans un logement aménagé dans le support dudit bras.

La présente invention propose un ensemble de moyens qui permet de supprimer le jeu dans le bras télescopique, en réalisant un guidage des deux pièces l'une par rapport à l'autre sans jeu, quelle que soit la position du tube central par rapport au fourreau.

Selon l'invention, le support comporte, entre le fourreau et le tube coulissant, des plaques de guidage et d'usure disposées dans la partie aval dudit fourreau, à son extrémité, la longueur de ces plaques est comprise entre deux et trois fois la largeur dudit tube, lequel tube est pris en étau entre lesdites plaques dont une moitié forme un dièdre en contact avec la surface interne du fourreau et l'autre moitié forme un dièdre également mais qui est soumis en permanence à des organes de pression interposés entre la paroi interne du fourreau et le dos des plaques.

Selon une autre disposition de l'invention, les plaques de pression comportent des lamages formant logement pour des ressorts hélicoïdaux disposés selon plusieurs rangées longitudinales, deux rangées par exemple.

Selon une autre disposition de l'invention, le fourreau comporte à son extrémité, des moyens de fixation des plaques, constitués d'un arrêtoir solidaire de ladite extrémité, lequel arrêtoir coopère avec une rainure transversale aménagée sur le dos des différentes plaques.

Selon une autre disposition de l'invention, l'extrémité du fourreau comporte une collerette sur laquelle sont fixées les plaquettes arrêtoirs, laquelle collerette comporte une pente d'entrée facilitant l'introduction des plaques et permettant une compression progressive des ressorts avant leur introduction dans le fourreau, entre la paroi interne de ce dernier et le tube coulissant.

Toujours selon l'invention, chaque plaque de guidage comporte une creusure centrale longitudinale sur chaque face, constituant une sorte de témoin d'usure pour la face active.

Selon une autre disposition préférentielle de l'invention, le support est associé à un outil d'extraction des plaques d'usure, lequel outil est manipulé directement par le bras, en prise avec la rainure transversale des plaques.

Selon une autre disposition de l'invention, l'engin comporte également des moyens de verrouillage permettant de fixer la position du chariot par rapport au bras, lesquels moyens sont du type constitués d'un plateau indexé, fixe par rapport au chariot, coopérant avec une butée ou doigt solidaire du bras et manoeuvré par un vérin entre une position active et une position inactive de verrouillage, lequel vérin est de préférence maintenu en permanence en position active de verrouillage et il est manoeuvré pour libérer le chariot.

Toujours selon l'invention, l'engin comporte un système de commande des mouvements du bras constitué d'un simple commutateur de sélection de positions : - position repos ou position transport, - position active de marquage en rive ou en axe, lequel commutateur permet également un relevage partiel du bras, l'ensemble de ces manoeuvres étant contrôlé au moyen de capteurs de détection de la position du bras et de la position de la coulisse.

L'invention sera encore détaillée à l'aide de la description suivante et des dessins annexés donnés à titre indicatif, et dans lesquels :
- la figure 1 représente, vu de côté et en particulier du côté gauche, un véhicule selon l'invention équipé d'un chariot de marquage ;
- la figure 2 représente, vu de dessus, le véhicule de la figure 1 en cours de réalisation d'une opération de marquage ;
- la figure 3 représente, en vue de face, le véhicule équipé d'un chariot de marquage ;
- la figure 4 représente, vu de l'arrière, le véhicule représenté figure 3 ;
- la figure 5 est une vue schématique du bras porte-chariot, monté sur le châssis, tel qu'il apparaît regardé depuis l'avant du véhicule ;
- la figure 6 est une vue de dessus de la figure 5;
- la figure 7 représente, schématiquement, le bras porte-chariot dans sa position normale pour le transport ;
- la figure 8 est une vue de côté partielle et agrandie de la figure 7 ;
- la figure 9 est une vue partielle en demi-coupe et en demi-vue extérieure du dispositif support constituant le bras porte-chariot ;
- la figure 10 est une section partielle du dispositif support télescopique représenté figure 9 ;
- la figure 11 montre, d'une façon plus détaillée, les moyens de fixation des plaques d'usure.

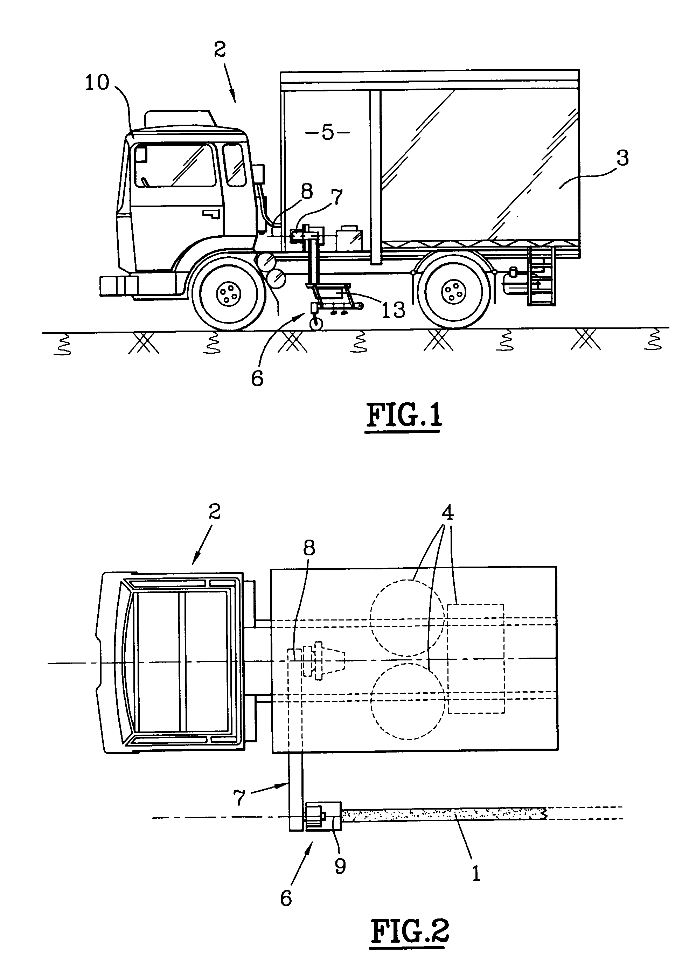

Les figures 1 à 4 montrent un véhicule permettant de réaliser des opérations de marquage des routes, et en particulier de tracer une ligne 1 , comme représenté figure 2.

Ce véhicule se présente sous la forme d'un camion 2 dont la carrosserie est aménagée pour accueillir, dans un compartiment 3 disposé au-dessus de l'essieu arrière, des réservoirs 4 contenant notamment les peintures et autres ingrédients.

Devant le compartiment 3, on trouve un espace 5 dans lequel est situé l'équipement qui permet de réaliser les opérations de marquage.

Cet équipement comprend un chariot 6 qui est porté par un bras 7. Ce bras 7 est représenté sur les figures en position horizontale, portant le chariot 6 du côté gauche du véhicule pour réaliser par exemple un marquage sur l'axe d'une chaussée.

Ce bras 7 présente la particularité d'être articulé sur un axe 8 longitudinal disposé horizontalement dans le plan vertical médian du véhicule.

Le chariot 6 est porté à l'extrémité du bras 7 au moyen d'un axe 9 qui est parallèle à l'axe 8.

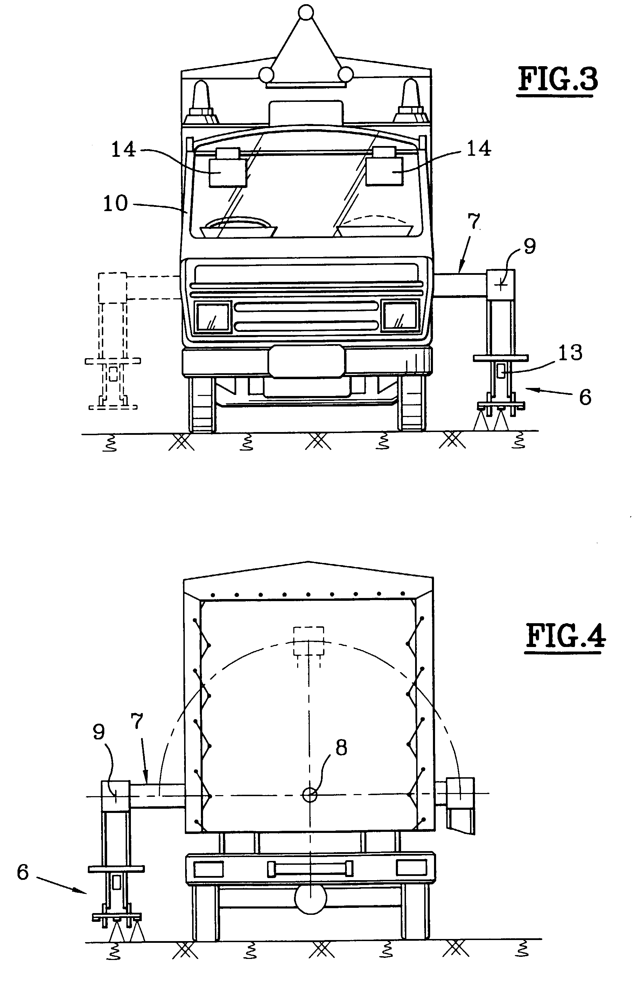

On remarque, figure 4 notamment, que le bras 7 peut pivoter autour de son axe 8 pour passer d'un côté du véhicule à l'autre côté en traversant le compartiment 5. Le chariot peut occuper toutes positions sur le côté du véhicule et il peut, pour le transport, être maintenu dans le compartiment 5. Le bras 7 est verrouillable en position verticale et il est télescopique pour permettre notamment le réglage du déport latéral du chariot 6.

Le véhicule 2 présente la particularité de comporter une cabine 10 du type à deux places. On remarque figure 3, que le poste du conducteur est situé sur la droite du véhicule alors que le chariot 6 se situe du côté gauche.

L'opérateur chargé de réaliser et de contrôler l'opération de marquage proprement dite est ainsi toujours positionné du même côté que le chariot 6 pour surveiller plus facilement le bon déroulement des opérations et intervenir immédiatement en cas de besoin.

Toujours sur la figure 3 on remarque en traits mixtes fins, que le conducteur dispose également d'un poste de conduite à gauche ; le conducteur utilise ce poste lorsque le chariot 6 est positionné à droite comme représenté en traits mixtes fins, pour réaliser par exemple un marquage en rive.

Pour réaliser une opération de marquage, le conducteur est guidé par un tracé préalable quelconque c'est-à-dire soit un ancien tracé s'il s'agit d'une simple réfection soit d'une ligne préalablement tracée sur une nouvelle chaussée par exemple.

Le suivi du tracé préalable s'effectue au moyen d'une caméra 13 positionnée sur le chariot 6. Cette caméra 13 doit avoir une ligne de visée parfaitement parallèle à l'axe d'avancement du véhicule. Le conducteur suit le tracé préalable au moyen d'un écran de visualisation connecté à la caméra 13. Cet écran 14 est positionné à droite ou à gauche selon la position du conducteur ou, comme représenté figure 3, on peut prévoir de préférence deux écrans disposés l'un à droite, l'un à gauche, utilisables en fonction de la position du conducteur.

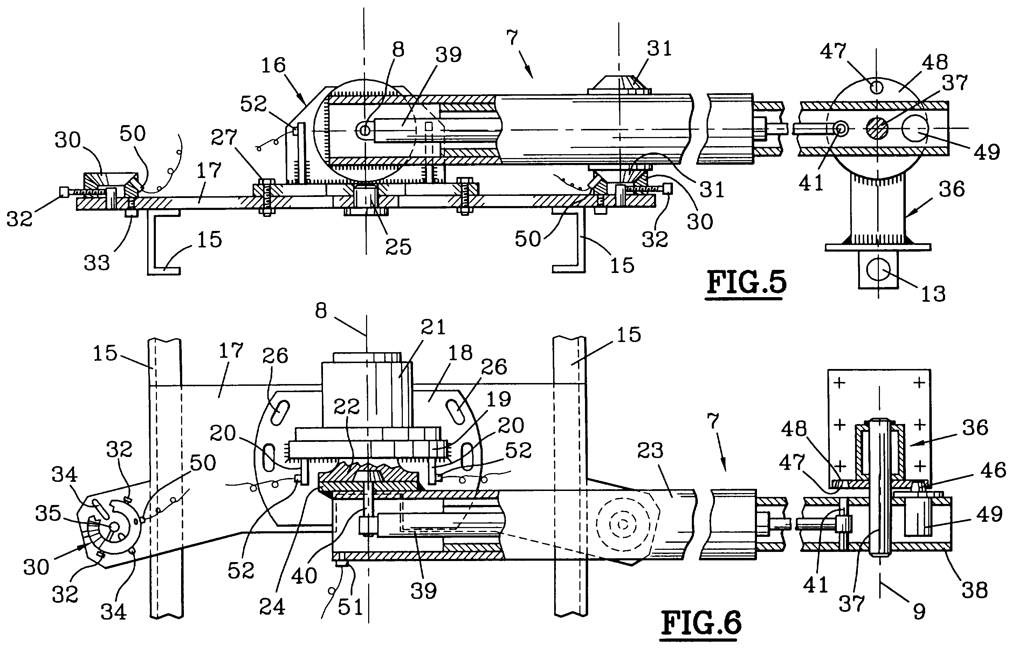

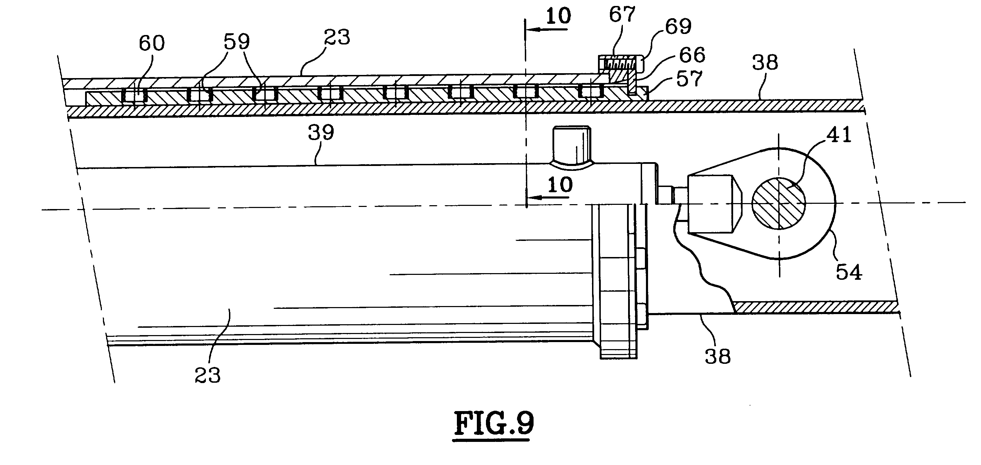

Les figures 5 à 10 représentent le bras 7 monté sur le châssis 15 du véhicule. Ce bras 7 est monté sur un support 16, sur lequel il est articulé autour de son axe longitudinal 8. Ce support 16 est solidaire d'une platine 17 qui est fixée sur le châssis 15. Le support 16 comprend une semelle 18 posée sur la platine 17 et une paroi 19 à l'équerre renforcée par des goussets 20.

La paroi 19 supporte un dispositif moteur 21 du type mécanique ou hydraulique, vérin rotatif ou motoréducteur. Ce dispositif moteur est muni d'un plateau 22 sur lequel est fixé le bras 7 et en particulier la coulisse 23 dudit bras.

En fait, cette coulisse 23 comporte à son extrémité disposée au centre du véhicule, un plateau 24 qui est fixé par tout moyen approprié sur le plateau 22.

La semelle 18 est solidaire de la platine 17 au moyen d'un axe vertical 25 interposé entre les deux. Cet axe est disposé dans le plan vertical médian du véhicule et il permet un mouvement angulaire des deux pièces 17 et 18 l'une par rapport à l'autre. La possibilité de rotation de la semelle 18 autour de l'axe 25, est limitée à la forme des lumières 26 aménagées dans ladite semelle, au travers desquelles passent les boulons 27. Ces boulons permettent de maintenir la semelle 18 et la platine 17 serrées l'une contre l'autre, tout en gardant une possibilité de rotation autour de l'axe 25, c'est-à-dire un léger degré de liberté.

L'amplitude du mouvement de la semelle 18 et du bras 7, autour de l'axe 25 qui constitue l'axe de lacet du véhicule, est de l'ordre plus ou moins 5°.

La position horizontale du bras 7 par rapport au châssis 15 du véhicule est figée au moyen d'organes de centrage et en particulier au moyen de berceaux 30 à siège conique, disposés sur la platine 17, latéralement, de part et d'autre du châssis 15 comme représenté sur les figures 5, 6 et 7.

Le bras 7 et en particulier sa coulisse 23 comportent des plots coniques 31. Ces plots sont disposés de part et d'autre du bras, dans le plan transversal du véhicule et ils sont fixés par tous moyens appropriés. Ces deux plots coopèrent respectivement avec l'un ou l'autre des berceaux 30 solidaires de la platine 17.

Chaque berceau 30 est solidaire de la platine 17 au moyen de vis 32 de façon à pouvoir être réglé d'une façon micrométrique. Les berceaux 30 sont fixés sur la platine 17 au moyen de vis 33 qui sont guidées dans des lumières 34, lesquelles lumières sont disposées selon un arc de cercle centré sur l'axe 25.

La position des berceaux 30 est fixée par les vis 32 qui prennent appui sur un pion 35 solidaire de la platine 17, lequel pion 35 est disposé entre les deux lumières 34 qui permettent de fixer le berceau sur la platine 17.

Chaque berceau 30 comporte une partie centrale creuse qui lui permet de se déplacer par rapport au pion 35.

On obtient ainsi une sorte de mémoire mécanique qui permet de régler et de positionner le bras 7 d'un côté ou de l'autre du véhicule d'une façon telle que l'axe de visée de la caméra 13 soit rigoureusement parallèle à l'axe de déplacement du véhicule lorsqu'il se déplace normalement en ligne droite.

La caméra 13 est disposée sur le porte-chariot 36, lequel porte-chariot est articulé sur un arbre 37 centré sur l'axe 9, lequel arbre est fixé à l'extrémité latérale du bras 7 et en particulier à l'extrémité du coulisseau 38. Cet arbre est orienté vers l'arrière du véhicule.

Le bras 7 étant télescopique, un vérin 39 est interposé entre la coulisse 23 et le coulisseau 38 et en particulier entre - une broche 40 solidaire de l'extrémité centrale de la coulisse 23, laquelle broche 40 est centrée sur l'axe 8 d'articulation de ladite coulisse, et - une broche 41 disposée vers l'extrémité latérale du coulisseau, en amont de l'axe principal 37. Ce vérin 39 est logé à l'intérieur du bras 7.

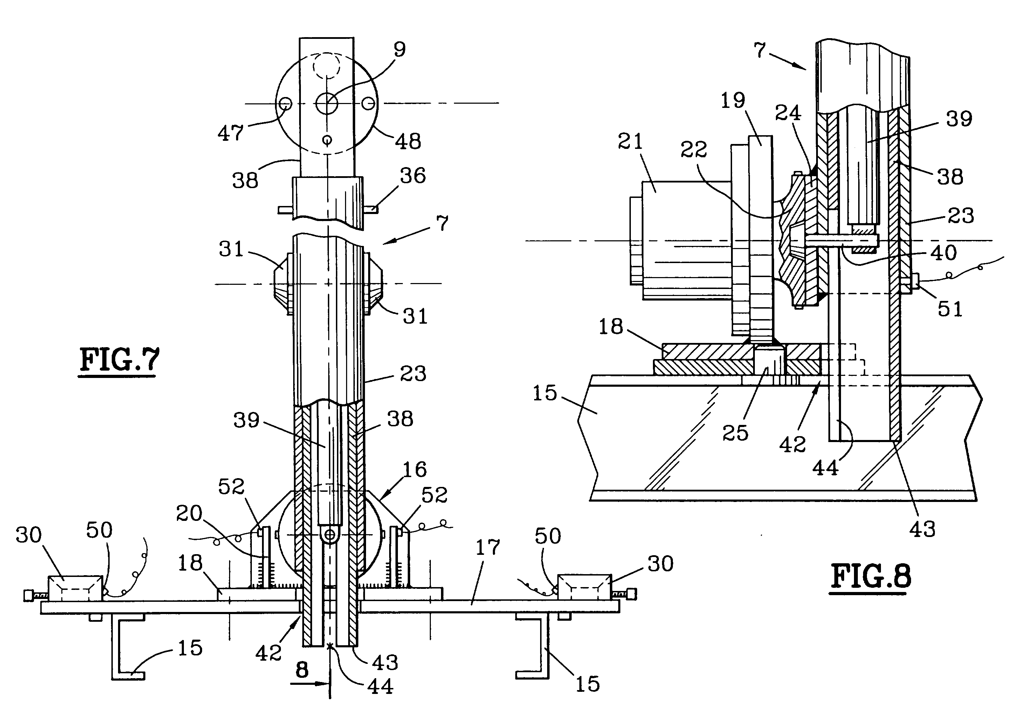

Le vérin 39 permet de régler l'écartement du chariot 6 par rapport au véhicule. Il permet également comme représenté figures 7 et 8, de déplacer le coulisseau 38 pour permettre le verrouillage du bras en position verticale.

En effet, la platine 17 et la semelle 18 comportent une échancrure 42 en forme de U ouvert vers l'avant du véhicule, qui permet de loger l'extrémité 43 du coulisseau 38 lorsque le bras 7 est en position verticale. Le coulisseau 38 comporte une lumière 44 aménagée du côté de son extrémité 43, pour lui permettre de franchir la broche 40 sur laquelle est fixé le vérin 39 et de positionner son extrémité 43 dans l'échancrure 42.

L'arbre 37 supporte le porte-chariot 36, lequel porte-chariot est immobilisé dans l'une de ses positions au moyen d'une butée ou doigt 46 qui s'engage dans l'un des orifices appropriés 47 aménagés sur un disque 48 solidaire dudit porte-chariot. Le doigt 46 est mis en position active ou inactive de verrouillage au moyen d'un vérin 49 logé dans l'extrémité latérale du coulisseau 38.

Ce vérin 49 est de préférence équipé de façon à maintenir le doigt 46 en position active de verrouillage en permanence au moyen d'un ressort par exemple. La mise en position inactive du doigt 46 s'effectue par une action positive c'est-à-dire, par exemple, au moyen d'une introduction d'huile sous pression dans le vérin 49.

La mise en oeuvre du bras 7 s'effectue depuis la cabine 10. L'opérateur dispose de moyens de commande comme par exemple un simple commutateur qui permet de positionner le bras 7 soit à droite soit à gauche du véhicule ou encore de le positionner à la verticale et de le verrouiller pour le transport. Le bras 7 peut également être relevé partiellement lors de manoeuvres particulières et notamment des petits déplacements afin d'éviter tout contact intempestif du chariot 6 avec la chaussée ou autre.

Toutes ces manoeuvres sont de préférence commandées automatiquement et contrôlées au moyen de capteurs.

Ainsi, on trouve des capteurs 50 sur les berceaux 30 qui permettent de donner une information de présence du bras 7 soit à droite soit à gauche du véhicule. On trouve également un capteur 51 disposé à l'extrémité centrale de la coulisse 23, lequel capteur donne des informations sur la position du coulisseau 38.

On trouve également une paire de capteurs 52 disposés sur les goussets 20 de part et d'autre du plateau 22 qui portent le bras 7. Ces capteurs 52 sont disposés dans un plan horizontal passant par l'axe 8. Ils donnent des informations sur la position du bras 7 soit à droite soit à gauche, soit à la verticale.

Les figures suivantes 9, 10 et 11 représentent, d'une façon détaillée, les moyens qui permettent de supprimer le jeu au niveau du bras support.

Le dispositif constituant le bras support télescopique 7 comprend : - une coulisse 23 constituée d'un produit profilé de section carrée ayant par exemple un côté de l'ordre de 150 mm, et - un coulisseau 38 de section carrée également, disposé dans ladite coulisse et dont le côté est par exemple de l'ordre de 120 mm.

Le coulisseau 38 est mobile par rapport à la coulisse 23, sous l'effet du vérin 39 dont le corps est solidaire de ladite coulisse 23. L'extrémité 54 de la tige du vérin est solidaire du coulisseau 38 au moyen de l'axe transversal 41. Le guidage du coulisseau 38 dans la coulisse 23 s'effectue par l'intermédiaire de plaques en matériau approprié à faible coefficient de frottement du genre plastique connu sous la dénomination commerciale "ERTALON".

Le coulisseau 38 est en fait pris en étau entre deux paires de plaques : - un couple de plaques 56 disposées à l'équerre formant un premier dièdre et - un couple de plaques 57 disposées à l'équerre également formant un second dièdre.

Les plaques 56 sont en contact direct avec la paroi interne de la coulisse 23, comme collées à cette paroi ; les plaques 57 sont pressées sur le coulisseau 38 au moyen d'organes élastiques 59 en forme de ressorts interposés entre ladite paroi interne de la coulisse 23 et lesdites plaques 57.

Ces ressorts 59 sont logés dans des lamages 60 aménagés dans l'épaisseur des plaques 57. Ces ressorts sont disposés selon deux rangées, de part et d'autre du plan médian du coulisseau 38. Ils sont au nombre de 6 à 10 par rangée selon la longueur des plaques 57.

Ces ressorts ont une précharge de l'ordre de 30 kilogrammes, chacun.

Les plaques 56 et 57 ont exactement la même section. Elles diffèrent par les lamages 60 servant de logement aux ressorts 59.

Leur largeur est légèrement supérieure à la largeur du coulisseau 38. Leur longueur est comprise entre 2 et 3 fois la largeur du coulisseau 38.

Ces plaques 56 et 57 comportent sur chaque face, une rainure centrale longitudinale : une rainure 61 sur le dos ou face externe et une rainure 62 sur la face interne ou face active de frottement. Ces rainures 61 et 62 constituent une sorte de témoin d'usure des plaques.

Ce montage des plaques 56 et 57 avec ressorts de pression, permet un rattrapage automatique du jeu au fur et à mesure de l'usure desdites plaques et il maintient une pression quasi constante sur le coulisseau 38. Les plaques 56 et 57 permettent également un fonctionnement à sec, sans graissage.

Le montage souple permet également d'absorber sans détérioration des sollicitations diverses et même composées de flexions et/ou de torsions.

Les plaques 56 et 57 constituent des pièces d'usure susceptibles d'être remplacées.

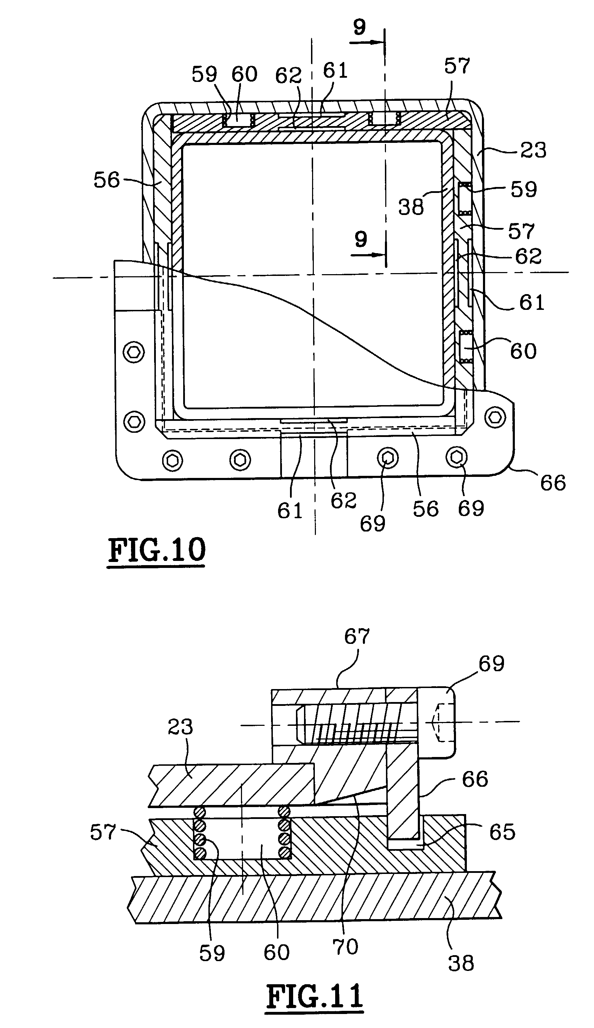

La figure 11 représente, d'une façon plus détaillée, les moyens de fixation d'une plaque 57, valables également pour les plaques 56.

Cette plaque 57 représentée figure 11, comporte une rainure transversale 65, aménagée sur son dos. Cette rainure transversale 65 permet l'ancrage de la plaque au moyen d'un arrêtoir 66 qui est fixé sur une collerette 67 elle-même solidaire de l'extrémité de la coulisse 23. L'arrêtoir 66 se présente de préférence sous la forme d'une petite équerre maintenue au moyen de vis 69 sur la collerette 67. Les deux branches de l'arrêtoir 66 coopèrent avec les rainures 65 de deux plaques adjacentes 56 et/ou 57.

La collerette 67, fixée à l'extrémité aval de la coulisse 23, comporte également une pente interne 70 pour faciliter l'introduction des plaques et en particulier pour comprimer progressivement les ressorts 59 lors de leur introduction dans la coulisse 23.

La mise en place ou l'extraction des plaques 56 et 57 s'effectue au moyen du coulisseau 38 par l'utilisation du mouvement d'extension ou de rétraction.

L'extraction des plaques 56 et 57 peut s'effectuer au moyen d'un outil, non représenté, en forme de crochet en prise avec le coulisseau 38 et avec la rainure transversale 65 aménagée à l'extrémité externe desdites plaques.

## Revendications

1. Engin pour le marquage de chaussées ou autres comprenant un chariot de marquage (6), caractérisé d'une part, en ce qu'il est constitué d'un véhicule porteur du type camion avec cabine bi-place pour accueillir un conducteur et un opérateur, laquelle cabine (10) est équipée d'un poste de conduite double et, d'autre part, en ce que ledit chariot (6) est porté par un bras (7) solidaire du châssis (15) dudit véhicule, lequel bras (7) coopère avec des moyens susceptibles de le positionner à droite ou à gauche dudit camion pour effectuer selon les besoins un marquage en rive ou en axe tout en ayant la possibilité de placer l'opérateur du côté dudit chariot.

2. Engin pour le marquage de chaussées ou autres selon la revendication 1, caractérisé en ce que le chariot de marquage (6) comporte au moins une caméra (13) qui permet au conducteur de suivre, depuis sa place, au moyen d'un écran (14), un tracé préalable quelconque, laquelle caméra est orientée de façon telle que son axe de visée corresponde avec l'axe d'avancement du véhicule.

3. Engin pour le marquage de chaussées ou autres selon la revendication 2, caractérisé en ce que le châssis (15) comporte, à droite et à gauche, un berceau (30) permettant de positionner le bras (7) selon une direction qui place la caméra (13) et le chariot (6) sur un axe qui correspond à l'axe d'avancement du véhicule, lequel berceau (30) est réglable par rapport au châssis (15) de façon micrométrique et il est verrouillable en position après réglage, ledit bras (7) coopérant avec chaque berceau (30), au moyen d'un plot (31) de forme conique correspondant à celle du siège dudit berceau.

4. Engin pour le marquage de chaussées ou autres selon la revendication 3, caractérisé en ce que le bras (7) est disposé dans un plan transversal du véhicule, articulé sur un support (16) autour d'un axe longitudinal (8), pour basculer de droite à gauche et inversement, lequel support (16) comporte, par rapport au châssis (15) du véhicule et en particulier par rapport à la platine (17) qui porte les berceaux (30), un léger degré de liberté autour de l'axe (25) constituant un axe de lacet, pour permettre le centrage automatique du bras dans l'un ou l'autre de ses berceaux (30), à droite ou à gauche, lesquels berceaux constituant une sorte de mémoire mécanique de positionnement.

5. Engin pour le marquage de chaussées ou autres selon la revendication 4, caractérisé en ce qu'il comporte des moyens de manoeuvre du bras (7), constitués d'un dispositif hydraulique ou mécanique, du type vérin rotatif ou motoréducteur (21).

6. Engin pour le marquage de chaussées ou autres selon la revendication 4, caractérisé en ce que le bras (7) est du type télescopique, constitué d'une coulisse (23) articulée sur l'axe (8) et d'un coulisseau (38) manoeuvré par un vérin (39) pour, d'une part, permettre le déplacement latéral du chariot (6) par rapport au véhicule et, d'autre part, permettre une mise en position de l'ensemble bras (7)-chariot (6) dans le gabarit du véhicule lors des manoeuvres ou lors des déplacements entre chantiers, lequel bras, lors des déplacements, est verrouillé en position verticale au moyen d'un blocage dudit coulisseau (38) dans un logement (42) aménagé dans le support (16) dudit bras, et dans la platine (17).

7. Engin pour le marquage de chaussées ou autres selon la revendication 6, caractérisé en ce que l'extrémité latérale du bras télescopique (7) comporte des moyens de suspension et d'articulation du chariot de marquage (6), constitués d'un arbre (37) parallèle à l'axe (8) de basculement du bras (7), orienté vers l'arrière du véhicule.

8. Engin pour le marquage de chaussées ou autres selon la revendication 7, caractérisé en ce qu'il comporte des moyens de verrouillage du chariot (6) dans une position appropriée, lesquels moyens sont du type constitués d'un plateau indexé (48), fixé sur le porte-chariot (36), coopérant avec une butée ou doigt (46) manoeuvré par un vérin (49) solidaire du bras (7), et entre une position active et une position inactive de verrouillage.

9. Engin pour le marquage de chaussées ou autres selon la revendication 8, caractérisé en ce qu'il comporte un vérin (49) permettant le verrouillage du chariot (6) par rapport au bras (7), lequel vérin est maintenu en permanence en position active de verrouillage au moyen d'un organe élastique par exemple et il est manoeuvré pour libérer ledit chariot par rapport audit bras (7).

10. Engin pour le marquage de chaussées ou autres selon l'une quelconque des revendications 1 à 9, caractérisé en ce qu'il comporte un système de commande du bras (7) constitué d'un simple commutateur de sélection de position, soit en position repos ou transport, soit en position active de marquage en rive ou en axe, lequel système de commande est associé à des capteurs (50, 51, 52) permettant de détecter la position dudit bras par rapport au châssis du véhicule notamment.

11. Engin pour le marquage de chaussées ou autres selon la revendication 6, caractérisé en ce qu'il comporte, entre la coulisse (23) et le coulisseau (38), des plaques (56, 57) de guidage et d'usure disposées dans la partie aval de ladite coulisse, à son extrémité, dont la longueur est de l'ordre de 2 à 3 fois la largeur du coulisseau (38), ledit coulisseau étant pris en étau entre lesdites plaques (56, 57) dont une moitié forme un dièdre maintenu sur la face interne de la coulisse (23) et l'autre moitié forme un dièdre également, soumis en permanence à l'action d'organes de pression interposés entre ladite paroi interne dudit fourreau et le dos desdites plaques.

12. Engin pour le marquage de chaussées ou autres selon la revendication 11, caractérisé en ce que les plaques de pression (57) comportent des lamages formant logements pour les organes élastiques en forme de ressorts hélicoïdaux (59), disposés selon des rangées longitudinales de part et d'autre du plan médian du coulisseau (38), et dont le nombre dans chaque rangée est compris entre 6 et 10.

13. Engin pour le marquage de chaussées ou autres selon l'une quelconque des revendications 11 ou 12, caractérisé en ce que la coulisse (23) comporte, à son extrémité, des moyens de fixation des plaques (56, 57), constitués d'un arrêtoir (66) solidaire de ladite extrémité, lequel arrêtoir coopère avec une rainure (65) aménagée transversalement sur le dos desdites plaques.

14. Engin pour le marquage- de chaussées ou autres selon la revendication 13, caractérisé en ce que l'extrémité de la coulisse (23) comporte une collerette (67) sur laquelle sont fixées les plaquettes arrêtoirs (66), au moyen de vis (69), laquelle collerette comporte une pente interne (70) pour faciliter l'introduction des plaques (56, 57) et permettre une compression progressive des ressorts (59) au fur et à mesure de leur introduction dans la coulisse.

15. Engin pour le marquage de chaussées ou autres selon l'une quelconque des revendications 11 à 14, caractérisé en ce que les plaques (56, 57) comportent une creusure centrale longitudinale (61, 62), sur chaque face, constituant une sorte de témoin d'usure de la face active.

16. Engin pour le marquage de chaussées ou autres selon la revendication 13, caractérisé en ce qu'il comporte un outil associé permettant notamment l'extraction des plaques (56, 57), lequel outil est interposé entre le coulisseau (38) et la rainure transversale (65) desdites plaques.
